# EUROPEAN PATENT APPLICATION

(11) **EP 4 694 392 A1**
(43) Date of publication of application: **11.02.2026**
(21) Application number: 24785238.7
(22) Date of filing: 04.04.2024
(51) Int. Cl.: H04W 52/32, H04W 52/14, H04W 74/00, H04L 1/08, H04L 5/00, H04W 74/0808

(54) **APPARATUS AND METHOD FOR SETTING POWER OF PRACH REPEATED TRANSMISSION IN WIRELESS COMMUNICATION SYSTEM**

(30) Priority: 05.04.2023 KR 20230044926
(71) Applicant: LG Electronics Inc., Yeongdeungpo-gu Seoul 07336 (KR)
(72) Inventor: SHIN, Seokmin, Seoul 06772 (KR); KO, Hyunsoo, Seoul 06772 (KR); YANG, Suckchel, Seoul 06772 (KR)
(74) Representative: Plasseraud IP
(86) International application number: PCT/KR2024/004379
(87) International publication number: WO 2024/210537

(57) **Abstract**

According to various embodiments of the present disclosure, there is provided a method of operating a user equipment (UE) in a wireless communication system. The method comprises receiving, from a base station, radio resource control (RRC) information related to a maximum repetition number of a random access (RA) preamble corresponding to a first number of times; performing a first repetition transmission of the RA preamble on the base station based on the first number of times with respect to a first RA procedure; based on the first repetition transmission of the RA preamble being performed based on the first number of times and the first RA procedure being not completed, determining a repetition transmission number of the RA preamble based on a second number of times that is greater than the first number of times; and performing a second repetition transmission of the RA preamble on the base station based on the second number of times with respect to a second RA procedure.

## Description

### [Technical Field]

The present disclosure relates to a wireless communication system. More specifically, the present disclosure relates to a device and method for configuring power of PRACH repetition transmission in a wireless communication system.

### [Background Art]

NR supports multiple numerologies (or subcarrier spacing (SCS)) for supporting diverse 5G services. For example, if the SCS is 15 kHz, the NR supports a wide area in traditional cellular bands; if the SCS is 30 kHz/60 kHz, the NR supports a dense-urban, lower latency, and wider carrier bandwidth, and if the SCS is 60 kHz or higher, the NR supports a bandwidth greater than 24.25 GHz to overcome phase noise.

Diverse RAN1 work items are defined to distinguish user equipment (UE)/base station operations based on RACH resources (e.g., PRACH preamble index, etc.). For example, UEs related to redcap, small data transmission, Msg.3 PUSCH repetition, etc. are defined to select a specific preamble index and request the base station whether to use a corresponding feature in a PRACH preamble transmission step. However, if an operation separately made for each work item is defined in spec, the UE/base station operations may become complex.

Accordingly, in order to efficiently support UE/base station operations, which need to be distinguished, using RACH resources (e.g., PRACH preamble index, etc.) in RAN2 Rel-17 RACH partitioning work item, the concept of "Feature Combination" has been introduced. That is, the base station may configure a specific PRACH resource (e.g., a preamble starting index and an indication of the total number) and inform the UE that one specific feature or combination of specific features is supported. The UE which intends to use/request a specific feature and/or combination of specific features may select one of preamble indexes of a region allocated to a specific feature and/or combination of specific features desired by the UE while performing the RACH procedure, and may transmit a PRACH preamble.

Characteristically, multiple parameters 'FeatureCombinationPreambles' may be configured in RACH-ConfigCommon, and preamble index durations corresponding to each region need to be configured not to overlap each other. Further, feature and/or combination of features configured in each region need to be configured not to overlap each other.

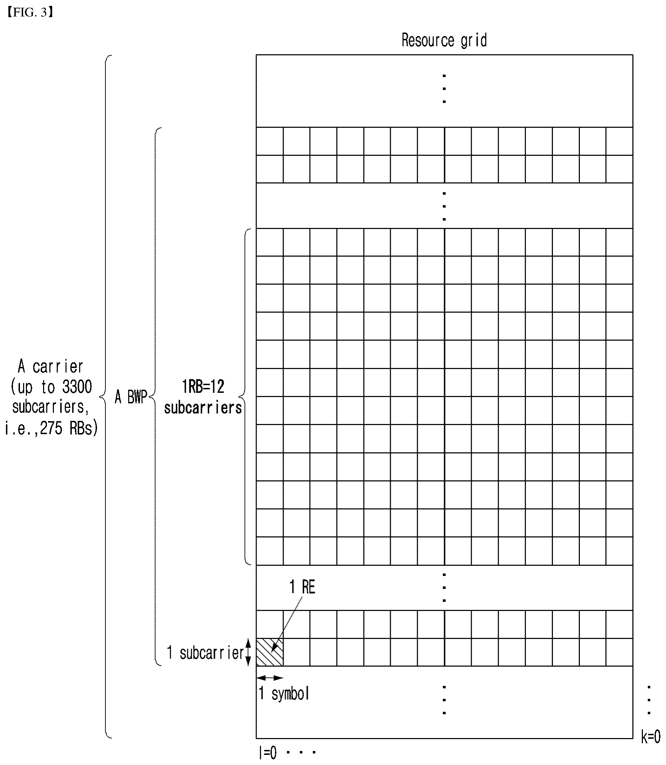

In addition to RACH-ConfigCommon allocated to the existing BWP-UplinkCommon, the base station may additionally allocate RACH configuration via Additional RACH-Config-r17. As a result, Rel-16 UEs, which cannot read AdditionalRACH-Config-r17, perform a RACH procedure based on RACH-ConfigCommon allocated to the existing BWP-UplinkCommon. However, UEs after Rel-17, which can read AdditionalRACH-Config-r17, check RACH-ConfigCommon allocated to the existing BWP-UplinkCommon and RACH-ConfigCommon allocated to AdditionalRACH-Config-r17 and perform the RACH procedure. Further, the one or multiple FeatureCombinationPreambles described above may also be configured to RACH-ConfigCommon allocated to the existing BWP-UplinkCommon. The one or multiple FeatureCombinationPreambles described above may also be configured to RACH-ConfigCommon allocated to AdditionalRACH-Config-r17. The RACH partitioning related RRC parameters may be represented as in Figure 3-0.

The introduction of PRACH preamble repetition transmission is being considered for UL coverage enhancement of the existing NR system. Therefore, in order to support PRACH repetition, it is necessary to define how to configure PRACH resources having a different repetition transmission number. As a simple method, a method may be considered to allocate RACH resources so as to distinguish multiple PRACH repetition resources having a different repetition transmission number based on a preamble level or an RO level.

### [Disclosure]

### [Technical Problem]

In order to solve the above-described problems, the present disclosure provides a device and method for configuring power of PRACH repetition transmission in a wireless communication system.

The present disclosure provides a device and method for performing an operation related to a case where the same repetition number is assigned to multiple PRACH repetition resources in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

According to various embodiments of the present disclosure, there is provided a method of operating a user equipment (UE) in a wireless communication system. The method comprises receiving, from a base station, radio resource control (RRC) information related to a maximum repetition number of a random access (RA) preamble corresponding to a first number of times; performing a first repetition transmission of the RA preamble on the base station based on the first number of times with respect to a first RA procedure; based on the first repetition transmission of the RA preamble being performed based on the first number of times and the first RA procedure being not completed, determining a repetition transmission number of the RA preamble based on a second number of times that is greater than the first number of times; and performing a second repetition transmission of the RA preamble on the base station based on the second number of times with respect to a second RA procedure.

According to various embodiments of the present disclosure, there is provided a method of operating a base station in a wireless communication system. The method comprises transmitting, to a user equipment (UE), radio resource control (RRC) information related to a maximum repetition number of a random access (RA) preamble corresponding to a first number of times; receiving a first repetition transmission of the RA preamble from the UE based on the first number of times with respect to a first RA procedure; and based on the first repetition transmission of the RA preamble being performed based on the first number of times and the first RA procedure being not completed, receiving a second repetition transmission of the RA preamble from the UE based on a second number of times with respect to a second RA procedure, and the second number of times is a repetition transmission number of the RA preamble that is greater than the first number of times.

According to various embodiments of the present disclosure, there is provided a user equipment (UE) in a wireless communication system, the UE comprising a transceiver, at least one processor, and at least one memory operably connectable to the at least one processor and storing instructions performing operations based on being executed by the at least one processor, and the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and storing instructions performing operations based on being executed by the at least one processor, and the operations comprise all steps of a method of operating the base station according to various embodiments of the present disclosure.

According to various embodiments of the present disclosure, there is provided a control device controlling a user equipment in a wireless communication system, the control device comprising at least one processor and at least one memory operably connected to the at least one processor, and the at least one memory stores instructions performing operations based on being executed by the at least one processor, and the operations comprise all steps of a method of operating the user equipment according to various embodiments of the present disclosure.

According to various embodiments of the present disclosure, there is provided a control device controlling a base station in a wireless communication system, the control device comprising at least one processor and at least one memory operably connected to the at least one processor, and the at least one memory stores instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating a user equipment according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating the base station according to various embodiments of the present disclosure.

### [Advantageous Effects]

In order to solve the above-described problems, the present disclosure can provide a device and method for configuring power of PRACH repetition transmission in a wireless communication system.

The present disclosure can provide a device and method for performing an operation related to a case where the same repetition number is assigned to multiple PRACH repetition resources in a wireless communication system.

### [Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates physical channels used in a system applicable to the present disclosure and an example of a general signal transmission method using the physical channels.
FIG. 2 illustrates an example of a structure of a radio frame used in a system applicable to the present disclosure.
FIG. 3 illustrates an example of a slot structure used in a system applicable to the present disclosure.
FIG. 4 illustrates an example of a slot structure of a radio frame used in a system applicable to the present disclosure.
FIG. 5 illustrates an example of RACH partitioning related RRC parameters in a system applicable to the present disclosure.
FIG. 6 illustrates an example of a process of operating a UE in a system applicable to the present disclosure.
FIG. 7 illustrates an example of a process of operating a base station in a system applicable to the present disclosure.
FIG. 8 illustrates an example of a structure of a first device and a second device in a system applicable to the present disclosure.

### [Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

### General Signal Transmission Method in 3GPP

### Physical Channels and General Signal Transmission

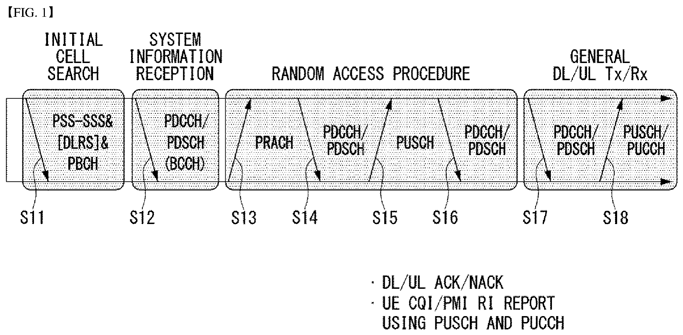

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

### Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

### Radio Frame Structure

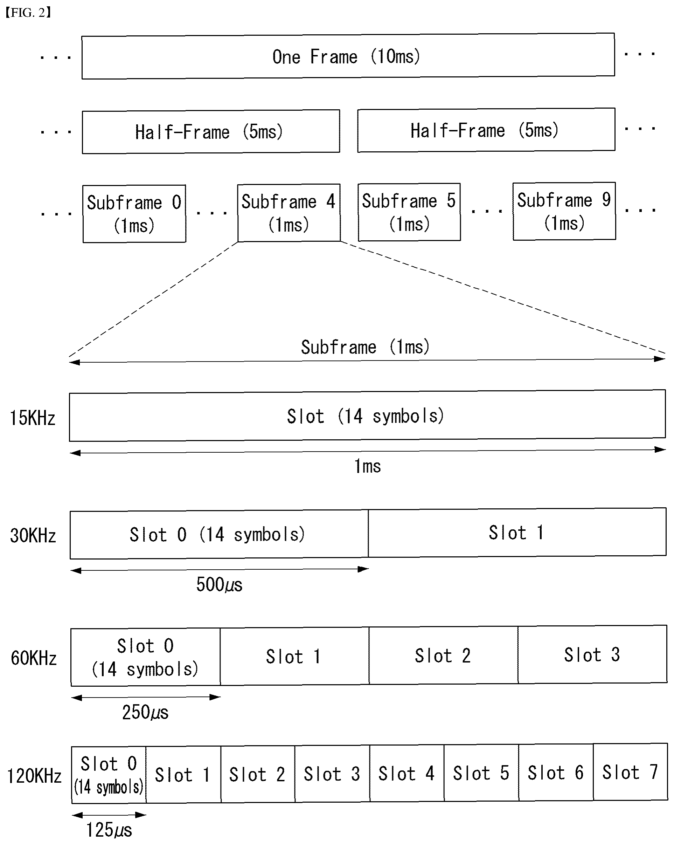

FIG. 2 illustrates an example of a structure of a radio frame used in a system applicable to the present disclosure.

In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

N^{slot}_{symb} is the number of symbols in the slot. N^{frame,u}ₛₗₒₜ is the number of slots in the frame. N^{subframe,u}ₛₗₒₜ is the number of slots in the subframe.

Table 2 shows that when the extended CP is used, the number of symbols per slot, the number of slots per frame, and the number of slots per subframe vary depending on the SCS.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The NR supports multiple numerologies (or subcarrier spacing (SCS)) for supporting diverse 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

**[Table 3]**

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

**[Table 4]**

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

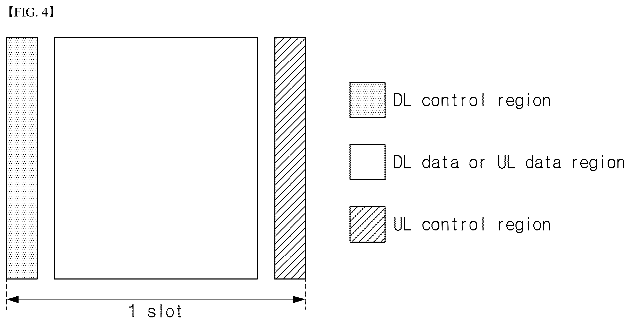

FIG. 4 illustrates an example of a slot structure of a radio frame used in a system applicable to the present disclosure.

More specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary. (e.g., DL control/DL data/UL control/UL data or UL control/UL data/DL control/DL data, etc.)

### Composition and Method of the Invention

NR supports multiple numerologies (or subcarrier spacing (SCS)) for supporting diverse 5G services. For example, if the SCS is 15 kHz, the NR supports a wide area in traditional cellular bands; if the SCS is 30 kHz/60 kHz, the NR supports a dense-urban, lower latency, and wider carrier bandwidth, and if the SCS is 60 kHz or higher, the NR supports a bandwidth greater than 24.25 GHz to overcome phase noise.

Diverse RAN1 work items are defined to distinguish user equipment (UE)/base station operations based on RACH resources (e.g., PRACH preamble index, etc.). For example, UEs related to redcap, small data transmission, Msg.3 PUSCH repetition, etc. are defined to select a specific preamble index and request the base station whether to use a corresponding feature in a PRACH preamble transmission step. However, if an operation separately made for each work item is defined in the 3GPP standard spec, the UE/base station operations may become complex.

Accordingly, in order to efficiently support UE/base station operations, which need to be distinguished, using RACH resources (e.g., PRACH preamble index, etc.) in RAN2 Rel-17 RACH partitioning work item, the concept of "Feature Combination" has been introduced. That is, the base station may configure a specific PRACH resource (e.g., a preamble starting index and an indication of the total number) and inform the UE that one specific feature or combination of specific features is supported. The UE which intends to use/request a specific feature and/or combination of specific features may select one of preamble indexes of a region allocated to a specific feature and/or combination of specific features desired by the UE while performing the RACH procedure, and may transmit a PRACH preamble. RRC parameters for the operation are defined in "FeatureCombinationPreambles" and "FeatureCombination" of 3GPP technical specification (TS) 38.331.

Table 5 below represents "FeatureCombinationPreambles" of 3GPP TS 38.331. Table 6 below represents "FeatureCombination" of 3GPP TS 38.331.

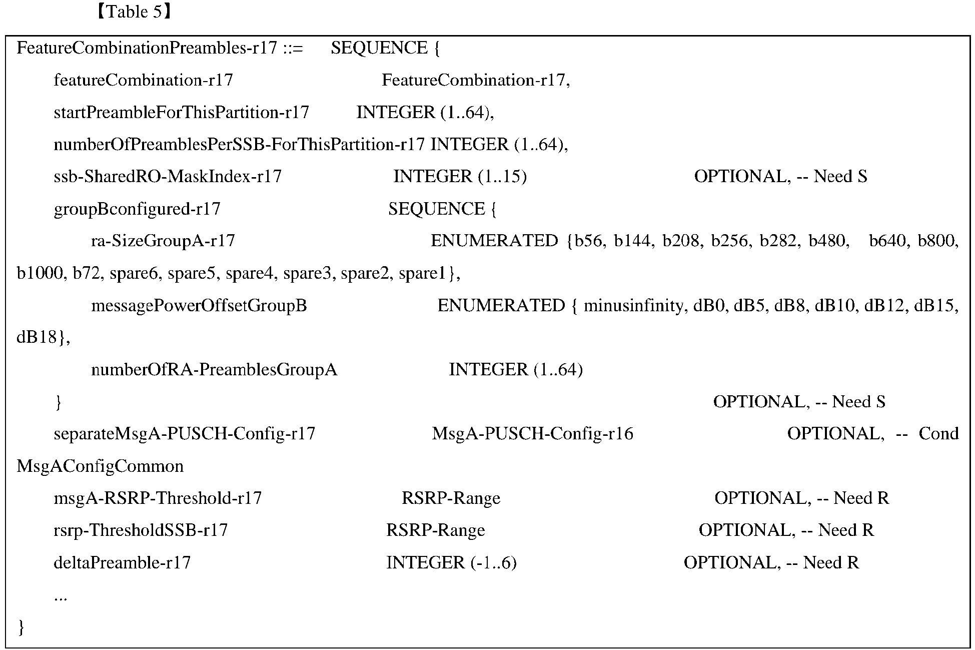

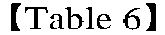

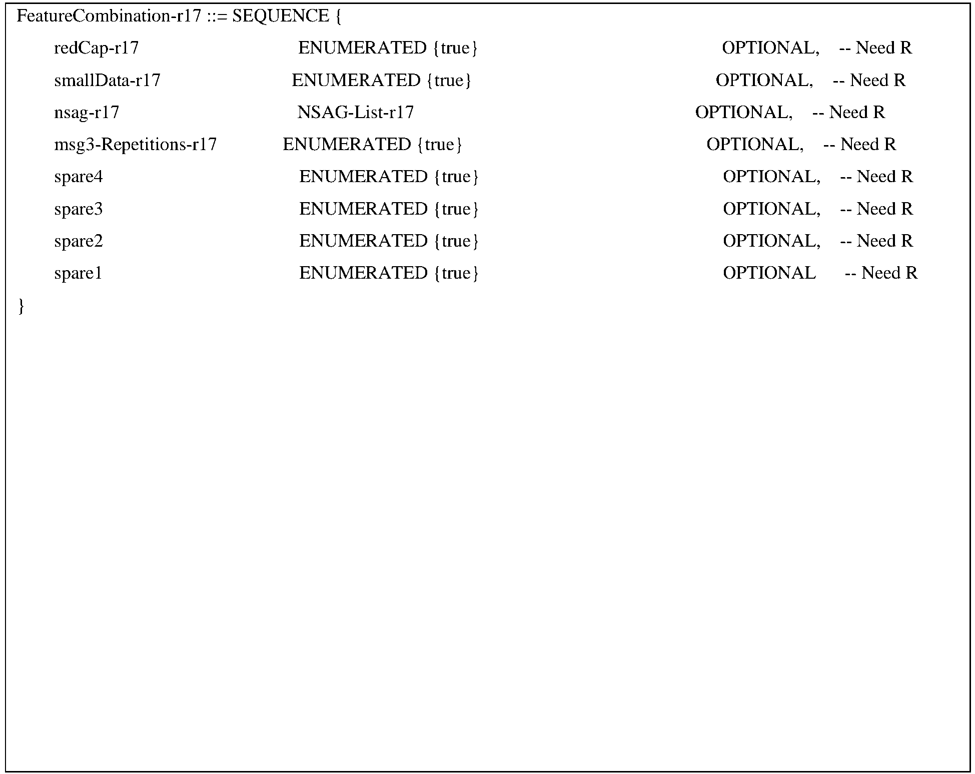

Characteristically, the multiple parameters 'FeatureCombinationPreambles' may be configured in RACH-ConfigCommon, and preamble index durations corresponding to each region need to be configured not to overlap each other. Further, feature and/or combination of features configured in each region need to be configured not to overlap each other.

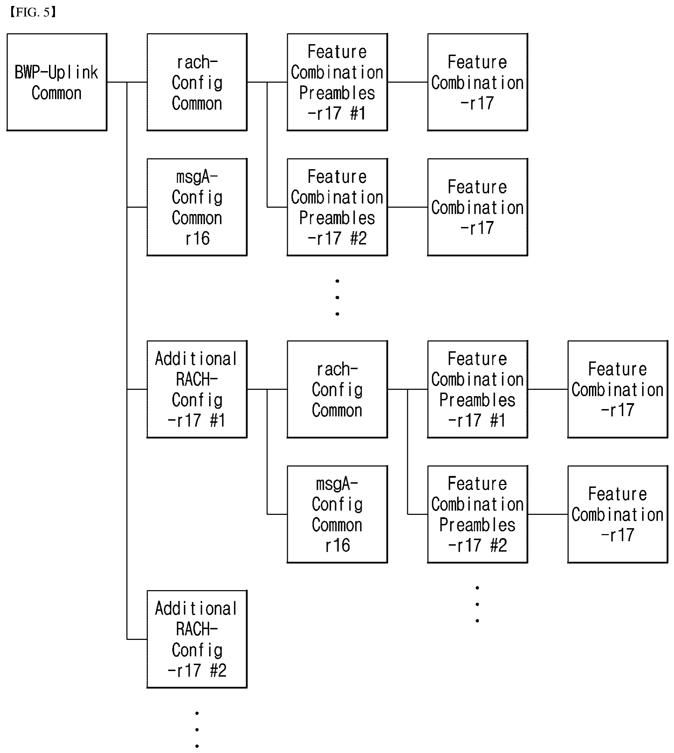

FIG. 5 illustrates an example of RACH partitioning related RRC parameters in a system applicable to the present disclosure.

In addition to RACH-ConfigCommon allocated to the existing BWP-UplinkCommon, the base station may additionally allocate RACH configuration via Additional RACH-Config-r17. As a result, Rel-16 UEs, which cannot read AdditionalRACH-Config-r17, perform a RACH procedure based on RACH-ConfigCommon allocated to the existing BWP-UplinkCommon. However, UEs after Rel-17, which can read AdditionalRACH-Config-r17, check RACH-ConfigCommon allocated to the existing BWP-UplinkCommon and RACH-ConfigCommon allocated to AdditionalRACH-Config-r17 and perform the RACH procedure. Further, the one or multiple FeatureCombinationPreambles described above may also be configured to RACH-ConfigCommon allocated to the existing BWP-UplinkCommon. The one or multiple FeatureCombinationPreambles described above may also be configured to RACH-ConfigCommon allocated to AdditionalRACH-Config-r17. FIG. 5 illustrates an example of the RACH partitioning related RRC parameters.

The introduction of PRACH preamble repetition transmission is being considered for UL coverage enhancement of the existing NR system. Therefore, in order to support PRACH repetition, it is necessary to define how to allocate PRACH resources having a different repetition transmission number. As a simple method, a method may be considered to allocate RACH resources so as to distinguish multiple PRACH repetition resources having a different repetition transmission number based on a preamble level or RO level. The present disclosure proposes a UE operation and/or a base station operation related to a case in which the same repetition number is assigned to multiple PRACH repetition resources.

### 1. Method of controlling PRACH transmit power when the same repetition number is assigned to multiple RACH configurations (and/or multiple RACH partitionings)

Among multiple methods of allocating PRACH repetition resources having a different repetition transmission number, a method may be considered to allocate RACH resources so that multiple PRACH repetition resources having a different repetition transmission number are distinguished based on a preamble level or an RO level. In this instance, if the same repetition number is assigned to the multiple PRACH repetition resources, a UE may perform a RACH procedure using PRACH resources corresponding to a specific RACH configuration, and then perform a RACH procedure using PRACH resources corresponding to another RACH configuration at a pre-arranged time. The following is proposed regarding when to set the pre-arranged time and/or how to set PRACH transmit power to be used by the UE at that time.

As a first proposed method, it may be defined that until a UE has selected a PRACH repetition resource corresponding to a specific RACH configuration (and/or a specific RACH partitioning) and has completed all RACH attempt transmissions, the UE cannot select a PRACH repetition resource corresponding to another RACH configuration (or another RACH partitioning). More specifically, if the UE fails to receive an RAR from a base station after performing all the RACH attempt transmissions, the UE may be allowed to select one of any RACH configurations (and/or any RACH partitionings) regardless of information on previously selected RACH configuration.

In this instance, time at which all the RACH attempt transmissions have been completed means when a value of higher layer parameter "PREAMBLE_TRANSMISSION_COUNTER" that counts the number of RACH attempts is greater than a value of higher layer parameter "preambleTransMax" that indicates the maximum number of RACH attempts. In other words, the time may be time at which all the RACH attempt transmissions have been completed when the parameter "PREAMBLE_TRANSMISSION_COUNTER" value, which is increased by 1 for each RACH attempt, is greater than the parameter "preambleTransMax" value (in 38.321, if PREAMBLE_TRANSMISSION_COUNTER = preambleTransMax + 1).

In addition, the UE may be defined to re-configure a repetition number at time at which the UE has completed all the RACH attempt transmissions. That is, the UE may re-measure RSRP at the time to re-configure the repetition number, or the UE may increase the repetition number because the UE fails to receive the RAR after performing all the RACH attempt transmissions.

If the repetition number to be used by the UE does not increase, a RACH procedure may be performed in a newly selected RACH configuration by reusing a PRACH transmit power value most recently used in a previous RACH procedure. In this case, since the UE uses and transmits a maximum transmit power from a first RACH attempt, power ramping between RACH attempts may be configured not to be performed.

On the other hand, if the repetition number to be used by the UE increases, a RACH procedure may be performed in a newly selected RACH configuration based on a PRACH transmit power used in a previous RACH procedure (with the corresponding value set as a PRACH transmit power of a first RACH attempt). In this case, the UE may be configured to perform power ramping between RACH attempts as before.

As a second proposed method, it may be defined that at time at which a UE has selected a PRACH repetition resource corresponding to a specific RACH configuration (or a specific RACH partitioning) and has not completed all RACH attempt transmissions (i.e., when "PREAMBLE_TRANSMISSION_COUNTER" is not greater than "preambleTransMax"), the UE selects a PRACH repetition resource corresponding to another RACH configuration (and/or another RACH partitioning). In this instance, the number of RACH attempts that allows a different RACH configuration (or a different RACH partitioning) to be able to be selected may be configured/indicated by the base station via higher layer signaling (e.g., SIB1, etc.), or may be pre-defined as a specific value (e.g., can be re-selected at each RACH attempt). More specifically, if the UE fails to receive an RAR from the base station after performing a pre-defined/pre-indicated number of RACH attempt transmissions, the UE may be allowed to select one of RACH configurations (and/or specific RACH partitionings) with the same repetition number, regardless of the previously selected RACH configuration. In the above UE operation, a method for the UE to configure the PRACH transmit power may be as follows.

First, it may be configured that the UE performs a RACH procedure without changing a parameter value for counting RACH attempts and/or a parameter value for counting power ramping that have been used in a previous RACH procedure. That is, the UE may perform the RACH procedure in a newly selected RACH configuration (and/or RACH partitioning) while maintaining PREAMBLE_POWER_RAMPING_COUNTER, PREAMBLE_TRANSMISSION_COUNTER, etc. without changing them. In this case, the UE may perform the RACH procedure in the newly selected RACH configuration using the PRACH transmit power that is power ramping higher than PRACH transmit power transmitted in a previous RACH attempt by 1-step. In this instance, PREAMBLE_POWER_RAMPING_STEP at which the UE performs the higher power ramping by 1-step may be configured to apply the value of the newly selected RACH configuration (and/or RACH partitioning).

Second, it may be configured that the UE initializes a parameter value for counting RACH attempts and/or a parameter value for counting power ramping, that have been used in a previous RACH procedure, to 0 and performs a RACH procedure. That is, the UE may perform the RACH procedure in a newly selected RACH configuration (and/or RACH partitioning) by initializing PREAMBLE_POWER_RAMPING_COUNTER, PREAMBLE_TRANSMISSION_COUNTER, etc. to 0. In this case, the UE may perform the RACH procedure using initial PRACH transmit power defined in the newly selected RACH configuration, regardless of the PRACH transmit power value transmitted in a previous RACH attempt.

Third, it may be configured that the UE reduces a parameter value for counting RACH attempts and/or a parameter value for counting power ramping, that have been used in a previous RACH procedure, by X and Y, respectively and performs a RACH procedure. In this instance, the X and Y values may be independently set/indicated by the base station via higher layer signaling (e.g., SIB 1), or may be predefined values (e.g., X=1, Y=1). In this case, the base station may set the remaining parameter value to be equal to the indicated parameter value by indicating only the X value or indicating only the Y value. That is, the UE may reduce PREAMBLE_TRANSMISSION_COUNTER, PREAMBLE_POWER_RAMPING_COUNTER, etc. from their existing values by X and Y, respectively, and may perform the RACH procedure in a newly selected RACH configuration (and/or RACH partitioning). For example, if X=1 and Y=1, the UE may perform the RACH procedure in the newly selected RACH configuration (and/or RACH partitioning) using the same PRACH transmit power value as the PRACH transmit power value transmitted in a previous RACH attempt.

Characteristically, a method of maintaining PREAMBLE_TRANSMISSION_COUNTER and reducing only PREAMBLE_POWER_RAMPING_COUNTER may be considered in order to prevent the UE from frequently and excessively changing the RACH configuration. That is, in the above example, X may be set to 0 (X=0) and Y may be set to 1 (Y=1). If set this way, each time the UE changes the RACH configuration, the PRACH transmit power will use the same value as the previously transmitted PRACH transmit power value (i.e., transmit power ramping will not be performed), and only the RACH attempt counter will increase, making it difficult to reach the max PRACH transmit power, which will lead to an increase in the RACH procedure failure probability of the UEs that excessively re-select the PRACH configuration.

The proposed methods can be configured/applied to other UL signals/channels such as MSG3 PUSCH, MSGA Preamble/PUSCH and/or PUSCH/PUCCH. Characteristically, the proposed UE/base station operations for PRACH repetition can also be configured/applied as UE/base station operations for other newly introduced features (e.g., repetition transmission features of Msg. 4 HARQ ACK PUCCH). For example, the feature for PUCCH repetition (e.g., pucch-Repetitions-r18) can be configured/applied instead of the feature for the proposed PRACH repetition, and the feature for PUCCH repetition can also be used for the proposed combination method and a method that the UE does not expect. Furthermore, when UE/base station operations for PRACH repetition and/or PUCCH repetition are supported simultaneously, the proposed methods can be configured/applied to all the two channels.

Since examples of the proposed methods described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) may be defined as a rule so that the base station informs the UE via a predefined signal (e.g., a physical layer signal or a higher layer signal). For example, the higher layer may include one or more of functional layers such as MAC, RLC, PDCP, RRC, and SDAP.

Methods, embodiments, or descriptions for implementing the methods proposed in the present disclosure can be applied separately, or one or more methods (or embodiments or descriptions) can be applied in combination.

### [Description of claims related to UE]

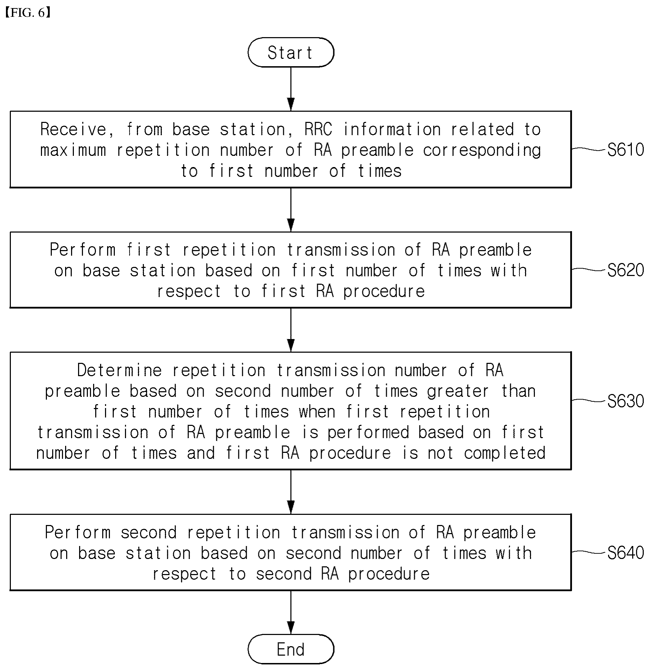

Below, the above-described embodiments are described in detail from an operation perspective of a user equipment (UE) with reference to FIG. 6. Methods to be described below are merely distinguished for convenience of explanation. Thus, as long as the methods are not mutually exclusive, it is obvious that partial configuration of any method can be substituted or combined with partial configuration of another method.

FIG. 6 illustrates an example of an operation process of a UE in a system applicable to the present disclosure.

In step S610, a UE receives, from a base station, radio resource control (RRC) information related to a maximum repetition number of a random access (RA) preamble corresponding to a first number of times.

In step S620, the UE performs a first repetition transmission of the RA preamble on the base station based on the first number of times with respect to a first RA procedure.

In step S630, when the first repetition transmission of the RA preamble is performed based on the first number of times and the first RA procedure is not completed, the UE determines a repetition transmission number of the RA preamble based on a second number of times that is greater than the first number of times.

In step S640, the UE performs a second repetition transmission of the RA preamble on the base station based on the second number of times with respect to a second RA procedure.

According to various embodiments of the present disclosure, when the first repetition transmission of the RA preamble related to the first number of times is performed and a random access response (RAR) is received from the base station, the first RA procedure may be successfully completed.

According to various embodiments of the present disclosure, an embodiment of FIG. 6 may further comprise determining random access (RA) resources related to the second repetition transmission of the RA preamble based on the second number of times.

According to various embodiments of the present disclosure, the second RA procedure may be performed based on the RA resources.

According to various embodiments of the present disclosure, each time the RA preamble is transmitted to the base station, information of PREAMBLE_TRANSMISSION_COUNTER may be increased by one.

According to various embodiments of the present disclosure, with respect to the repetition transmission number of the RA preamble, a change from the first number of times to the second number of times may be performed by the UE.

According to various embodiments of the present disclosure, when the information of the PREAMBLE_TRANSMISSION_COUNTER is related to preambleTransMax + 1, all of a configured number of random access channel (RACH) attempts may be performed.

According to various embodiments of the present disclosure, the preambleTransMax may be related to a maximum number of RACH attempts.

According to various embodiments of the present disclosure, the second number of times may be determined based on a measurement of a reference signal received power (RSRP).

According to various embodiments of the present disclosure, there is provided a user equipment (UE) in a wireless communication system. The UE may include a transceiver and at least one processor, and the at least one processor may be configured to perform the operation method of the UE based on FIG. 6.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 6 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 6.

### [Description of claims related to base station]

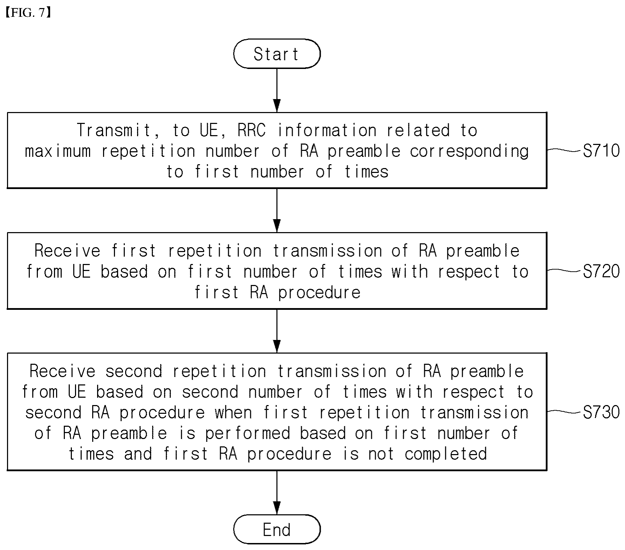

Below, the above-described embodiments are described in detail from a perspective of an operation of a base station with reference to FIG. 7. Methods to be described below are merely distinguished for convenience of explanation. Thus, as long as the methods are not mutually exclusive, it is obvious that partial configuration of any method can be substituted or combined with partial configuration of another method.

FIG. 7 illustrates an example of an operation process of a base station in a system applicable to the present disclosure.

In step S710, a base station transmits, to a user equipment (UE), radio resource control (RRC) information related to a maximum repetition number of a random access (RA) preamble corresponding to a first number of times.

In step S720, the base station receives a first repetition transmission of the RA preamble from the UE based on the first number of times with respect to a first RA procedure.

In step S730, when the first repetition transmission of the RA preamble is performed based on the first number of times and the first RA procedure is not completed, the base station receives a second repetition transmission of the RA preamble from the UE based on a second number of times with respect to a second RA procedure.

According to various embodiments of the present disclosure, the second number of times is a repetition transmission number of the RA preamble that is greater than the first number of times.

According to various embodiments of the present disclosure, when the first repetition transmission of the RA preamble related to the first number of times is performed and a random access response (RAR) from the base station is received by the UE, the first RA procedure may be successfully completed.

According to various embodiments of the present disclosure, each time the RA preamble is transmitted from the UE to the base station, information of PREAMBLE_TRANSMISSION_COUNTER may be increased by one.

According to various embodiments of the present disclosure, with respect to the repetition transmission number of the RA preamble, a change from the first number of times to the second number of times may be performed by the UE.

According to various embodiments of the present disclosure, when the information of the PREAMBLE_TRANSMISSION_COUNTER corresponds to preambleTransMax + 1, all of a configured number of random access channel (RACH) attempts may be performed.

According to various embodiments of the present disclosure, the preambleTransMax may be related to a maximum number of RACH attempts.

According to various embodiments of the present disclosure, the second number of times may be determined based on a measurement of a reference signal received power (RSRP).

According to various embodiments of the present disclosure, there is provided a base station in a wireless communication system. The base station may include a transceiver and at least one processor, and the at least one processor may be configured to perform the operation method of the base station based on FIG. 7.

According to various embodiments of the present disclosure, there is provided a device controlling a base station in a wireless communication system. The device may include at least one processor and at least one memory operably connected to the at least one processor. The at least one memory may be configured to store instructions performing the operation method of the base station based on FIG. 7 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the base station based on FIG. 7.

### Wireless device applicable to the present disclosure

Examples of wireless devices to which various embodiments of the present disclosure are applied are described below.

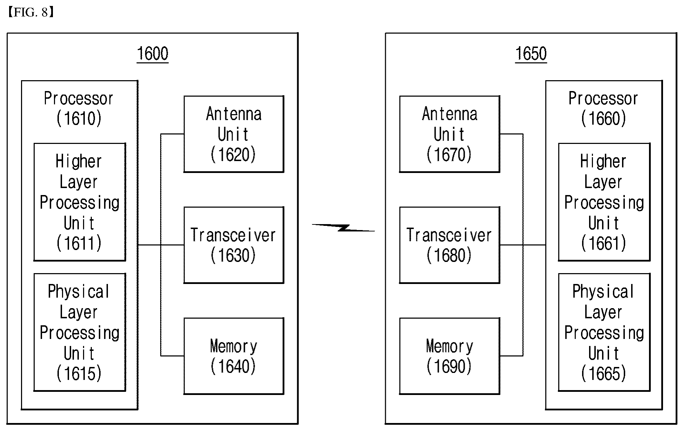

FIG. 8 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Wireless communication technologies implemented in the devices 1600 and 1650 according to the present disclosure may include LTE, NR, and 6G, as well as various other wireless communication technologies.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method of operating a user equipment (UE) in a wireless communication system, the method comprising:
receiving, from a base station, radio resource control (RRC) information related to a maximum repetition number of a random access (RA) preamble corresponding to a first number of times;
performing a first repetition transmission of the RA preamble on the base station based on the first number of times with respect to a first RA procedure;
based on the first repetition transmission of the RA preamble being performed based on the first number of times and the first RA procedure being not completed, determining a repetition transmission number of the RA preamble based on a second number of times that is greater than the first number of times; and
performing a second repetition transmission of the RA preamble on the base station based on the second number of times with respect to a second RA procedure.

2. The method of claim 1, wherein, based on the first repetition transmission of the RA preamble related to the first number of times being performed and a random access response (RAR) being received from the base station, the first RA procedure is successfully completed.

3. The method of claim 1, further comprising determining random access (RA) resources related to the second repetition transmission of the RA preamble based on the second number of times,
wherein the second RA procedure is performed based on the RA resources.

4. The method of claim 1, wherein each time the RA preamble is transmitted to the base station, information of PREAMBLE_TRANSMISSION_COUNTER is increased by one.

5. The method of claim 1, wherein, with respect to the repetition transmission number of the RA preamble, a change from the first number of times to the second number of times is performed by the UE.

6. The method of claim 4, wherein, based on the information of the PREAMBLE_TRANSMISSION_COUNTER being related to preambleTransMax + 1, all of a configured number of random access channel (RACH) attempts are performed, and
wherein the preambleTransMax is related to a maximum number of RACH attempts.

7. The method of claim 1, wherein the second number of times is determined based on a measurement of a reference signal received power (RSRP).

8. A method of operating a base station in a wireless communication system, the method comprising:
transmitting, to a user equipment (UE), radio resource control (RRC) information related to a maximum repetition number of a random access (RA) preamble corresponding to a first number of times;
receiving a first repetition transmission of the RA preamble from the UE based on the first number of times with respect to a first RA procedure; and
based on the first repetition transmission of the RA preamble being performed based on the first number of times and the first RA procedure being not completed, receiving a second repetition transmission of the RA preamble from the UE based on a second number of times with respect to a second RA procedure,
wherein the second number of times is a repetition transmission number of the RA preamble that is greater than the first number of times.

9. The method of claim 8, wherein, based on the first repetition transmission of the RA preamble related to the first number of times being performed and a random access response (RAR) from the base station being received by the UE, the first RA procedure is successfully completed.

10. The method of claim 8, wherein the second RA procedure is performed based on random access (RA) resources related to the second repetition transmission of the RA preamble based on the second number of times.

11. The method of claim 8, wherein each time the RA preamble is transmitted from the UE to the base station, information of PREAMBLE_TRANSMISSION_COUNTER is increased by one.

12. The method of claim 8, wherein, with respect to the repetition transmission number of the RA preamble, a change from the first number of times to the second number of times is performed by the UE.

13. The method of claim 11, wherein, based on the information of the PREAMBLE_TRANSMISSION_COUNTER being related to preambleTransMax + 1, all of a configured number of random access channel (RACH) attempts are performed, and
wherein the preambleTransMax is related to a maximum number of RACH attempts.

14. The method of claim 8, wherein the second number of times is determined based on a measurement of a reference signal received power (RSRP).

15. A user equipment (UE) in a wireless communication system, the UE comprising:
a transceiver;
at least one processor; and
at least one memory operably connectable to the at least one processor and storing instructions performing operations based on being executed by the at least one processor,
wherein the operations comprise all steps of a method according to any one of claims 1 to 7.

16. A base station in a wireless communication system, the base station comprising:
a transceiver;
at least one processor; and
at least one memory operably connectable to the at least one processor and storing instructions performing operations based on being executed by the at least one processor,
wherein the operations comprise all steps of a method according to any one of claims 8 to 14.

17. A control device controlling a user equipment in a wireless communication system, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 1 to 7.

18. A control device controlling a base station in a wireless communication system, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 8 to 14.

19. One or more non-transitory computer readable mediums storing one or more instructions,
wherein the one or more instructions perform operations based on being executed by one or more processors, and
wherein the operations comprise all steps of a method according to any one of claims 1 to 7.

20. One or more non-transitory computer readable mediums storing one or more instructions,
wherein the one or more instructions perform operations based on being executed by one or more processors, and
wherein the operations comprise all steps of a method according to any one of claims 8 to 14.
